## Europäisches Patentamt

## European Patent Office

## Office européen des brevets

(19)

(11) Veröffentlichungsnummer: **0 053 155**
**B1**

(12) # EUROPÄISCHE PATENTSCHRIFT

(45) Veröffentlichungstag der Patentschrift:
**02.01.85**

(51) Int. Cl.³: **C 02 F 1/68, C 09 K 3/32**

(21) Anmeldenummer: **81901543.9**

(22) Anmeldetag: **16.06.81**

(86) Internationale Anmeldenummer:
**PCT/AT 81/00015**

(87) Internationale Veröffentlichungsnummer:
**WO 81/03656 (24.12.81 Gazette 81/30)**

(54) **VERFAHREN ZUR BESEITIGUNG VON AUF WASSER AUFSCHWIMMENDEN FLÜSSIGKEITEN.**

(30) Priorität: **16.06.80 AT 3172/80**

(43) Veröffentlichungstag der Anmeldung:
**09.06.82 Patentblatt 82/23**

(45) Bekanntmachung des Hinweises auf die Patenterteilung:
**02.01.85 Patentblatt 85/1**

(84) Benannte Vertragsstaaten:
**DE FR GB**

(56) Entgegenhaltungen:
**DE - A - 1 944 679**
**GB - A - 1 170 959**

(73) Patentinhaber: **NEY, Inge, Hauptstrasse 15, A-2412 Wolfsthal (AT)**
Patentinhaber: **SIEWECKE, Nina, Am Alten Dreisch 60B, D-4800 Bielefeld 1 (DE)**
Patentinhaber: **Krasensky, Hans A., Alfred Wegenergasse 11, A-1190 Wien (AT)**

(72) Erfinder: **NEY, Karl Friedrich, Hauptstrasse 15, A-2412 Wolfsthal (AT)**

(74) Vertreter: **Kliment, Peter, Dipl.-Ing. Mag.-Jur., Singerstrasse 8, A-1010 Wien (AT)**

## Beschreibung

Die Entfernung von auf Wasser schwimmenden organischen Stoffen, insbesondere von Rohöl auf Meerwasser, ist für den Umweltschutz von weltweiter Bedeutung. Zur Lösung dieses Problems sind schon viele Vorschläge unterbreitet worden.

So wird in der DE-B 1 953 587 eine biegsame Sperre zum Auffangen von auf einer Wasseroberfläche schwimmenden Fremdkörpern vorgeschlagen. Die US-A 3 607 741 beschreibt die Verwendung von hydrophob und ölfest imprägnierten Cellulose zum Aufsaugen von Öl. Die DE-B 2 417 431, 2 520 999 und 2 654 909 befassen sich mit der Entfernung von Öl auf Wasser durch Einwirkung von Öl zersetzenden Mikroben. In der DE-B 2 802 673 und 2 806 851 wird vorgeschlagen, das Öl mit organischen oder anorganischen Pulvern großer Oberflächen zu binden. Auch aus der FR-A 1 523 828 ist es bekannt, organische Flüssigkeiten aus ihren Mischungen mit Wasser zu entfernen, indem diese mit festen, teilchenförmigen Adsorptionsmitteln für die organischen Flüssigkeiten behandelt werden. Diese Adsorptionsmittel bestehen insbesondere aus vernetzten Vinylpolymeren, wobei der chemische Aufbau der Polymeren und insbesondere ihr Vernetzungsgrad für das Ausmaß ihrer Adsorptionsfähigkeit maßgebend sind.

Gemäß der FR-A 2 103 217 wird auf die auf dem Wasser schwimmende organische Flüssigkeit eine unter Einwirkung von Wasser polymerisierende Verbindung aufgebracht, die nach der Polymerisation eine feste Struktur bildet, die die organische Flüssigkeit einhüllt und mit dieser gemeinsam aus dem Wasser entfernbar ist. Als polymerisierbare Verbindung wird 2-Cyano-acrylsäureester vorgeschlagen.

Eine Mischung geschäumter Flocken aus Polystyrol und Polyurethan bzw. Polykondensationsharzen soll gemäß DE-B 1 944 636 auf die ölbeschichtete Wasseroberfläche aufgebracht werden. Die Flockenmischung adsorbiert das Öl, wobei der Polystyrolschaum eher die hochmolekularen Öle, der Polyurethanschaum die leichter flüchtigen Substanzen, wie z. B. Benzin adsorbiert.

Schließlich ist es noch aus der GB-A 1 170 959 und der DE-A 1 944 679 bekannt, in situ auf oder unterhalb der zu reinigenden Oberfläche einen Kunststoffschaum herzustellen, der die Ölschicht adsorbieren soll. Als einziges praktisches Beispiel für ein derartig verwendbares Kunststoffmaterial wird in beiden Fällen Polyurethan vorgeschlagen, als mögliche Varianten werden Harnstoff-Formaldehyd-Schäume und Vinylätherschäume erwähnt.

Alle diese Verfahren haben die Nachteile, daß sie in größerem Ausmaß aus Gründen der Wirtschaftlichkeit praktisch nicht anwendbar bzw. zu wenig wirksam sind.

Durch das erfindungsgemäße Verfahren werden diese Nachteile überbrückt. Die Erfindung betrifft demnach ein Verfahren zur Beseitigung von einer auf Wasser schwimmenden Flüssigkeit, z. B. Öl, insbesondere von Rohöl auf Meerwasser, durch in-situ-Bildung eines wasserbeständigen Kunststoffschaumes im Bereich der zu reinigenden Wasseroberfläche.

Erfindungsgemäß ist dieses Verfahren dadurch gekennzeichnet, daß um die zu beseitigende Flüssigkeit herum und allenfalls auch in etwa der Mitte derselben eine Mischung, die ein lösungsmittelfreies flüssiges Epoxidharz, ein Siliconpolymer mit Si—H-Gruppen als Schäumungsmittel, 5—15 Gew.-%, bezogen auf das Epoxidharz, eines Harzvergüters auf Basis eines Alkylphenols und eines Bisphenols sowie eines Methylalkylketons und 20—30 Gew.-%, bezogen auf die zuzusetzende Härtermenge, eines Accelerators enthält, mit einem Di- oder Polyamin zur Aushärtung gebracht wird.

Es ist bevorzugt, etwa 7 Gew.-%, bezogen auf das Epoxidharz, des Harzvergüters und etwa 25 Gew.-%, bezogen auf die zuzusetzende Härtermenge, des Accelerators einzusetzen. Außerdem ist es vorteilhaft, der Mischung 10 bis 100, insbesondere 10—20 Gew.-%, bezogen auf das Epoxidharz, eines Zuschlagstoffes beizufügen.

Als Di- oder Polyamin wird bevorzugt Äthylendiamin, Diäthylentriamin, Dipropylentriamin oder Triäthylentetramin zuzusetzen.

Gemäß einer bevorzugten Ausführungsform der Erfindung wird die erwähnte Aushärtung der Mischung mit dem Di- oder Polyamin in Gegenwart von reaktionsäquivalenten Mengen von Polybutadien und/oder Mischpolymerisaten auf Basis von Butadien und Styrol vorgenommen.

Der aus diesen Komponenten gebildete Schaumstoffring saugt das Öl auf. Zusätzlicher Schaumstoff wird gewünschtenfalls in etwa der Mitte der zu beseitigenden Flüssigkeit dann gebildet, wenn der um die Flüssigkeit herum gebildete Schaumstoffring nicht die ganze Flüssigkeit aufgesaugt hat. So kann z. B. in großen, bei Tankerunfällen entstehenden Öllachen zunächst die Öllache von einem Schaumstoff eingeschlossen und dann ein allenfalls in der Ölmitte verbliebenes, nicht gebundenes Öl durch zusätzliche Schaumstoffbildung in der Ölmitte von diesem zusätzlichen Schaumstoff abgebunden werden. Das mit Öl vollgesaugte Schaummaterial kann z. B. von Schiffen mit Baggerausrüstung aufgenommen und das Öl kann gegebenenfalls durch Auspressen wiedergewonnen werden.

Ein durch Aushärtung der genannten Mischung gebildeter Schaumstoff weist folgende Eigenschaften auf: er ist wasserabstoßend und kann daher im Wasser gebildet werden; sein Raumgewicht liegt bei zumindest 150 g/l; seine Porengröße ist einstellbar; bei der Schaumstoffbildung wird das Harzvolumen auf das 6- bis 10fache vergrößert.

Als Epoxidharz kann jedes Epoxidharz eingesetzt werden, einschließlich solcher Harze, in denen außer Sauerstoffatomen auch andere Heteroatome, wie z. B. Stickstoff und Silizium eingebaut sind.

Vorzugsweise ist das Epoxidharz ein durch Umsetzung von Epichlorhydrin mit Diphenylolpropan erhaltenes Harz und weist vorzugsweise ein mittleres Molekulargewicht von 330 bis 470, ein Epoxid-Äquivalentgewicht (g Harz, die 1 Mol Epoxid enthalten) von 170 bis 270 und einen Epoxidwert (Mol Epoxid/100 g Harz = 100 : Epoxidäquivalentgewicht) von 0,37 bis 0,59 auf.

Der Harzvergüter hat die Aufgabe, die Wasserfestigkeit des fertigen Schaumstoffes zu gewährleisten. Im Harzvergüter eignen sich als Alkylphenole Kresole, Butylphenol und insbesondere p-Nonyl- oder Dodecylphenol; als Bisphenol eignet sich insbesondere Bisphenol A, wobei jedoch auch andere Bisphenole, wie Bisphenol B oder o,o'-Bisphenol, oder auch ein Gemisch von Bisphenolen im Harzvergüter vorliegen können. Als Methylalkylketon wird vorzugsweise Methyläthyl- oder Methylisobutylketon verwendet. Der Harzvergüter kann z. B. aus 30 bis 40 Gew.-% Alkylphenol, 25 bis 35 Gew.-% Bisphenol und 30 bis 40 Gew.-% Methylalkylketon bestehen.

Der Accelerator bewirkt eine Beschleunigung der Reaktion und kann einer derjenigen sein, dessen Verwendung bei Kunststoffen bekannt ist, und ist vorzugsweise Salicylsäure oder Phosphorsäure; er kann aber auch aus einem Gemisch dieser Verbindungen bestehen.

Das Schäumen wird durch Zusatz eines Siliconpolymeren mit Si—H-Gruppen, wie einem linearen Polymethylhydrogensiloxan, bewirkt.

Die Herstellung einer solchen Mischung erfolgt durch Vermischen von Epoxidharz, Harzvergüter, Schäumungsmittel und Accelerator; Zuschlagstoffe können dieser Mischung oder aber vor Herstellung der Mischung dem Harzvergüter oder dem Accelerator beigemischt werden. Als Zuschlagstoffe können ölabsorbierende Substanzen wie z. B. Asbestmehl, Asbestkurzfasern, Holzmehl oder Vermiculit, insbesondere in Mengenanteilen von 10—20 Gew.-% bezogen auf das Epoxidharz eingesetzt werden.

Eine derartige Mischung (M) kann z. B. enthalten:

1) ein Epoxidharz mit folgenden Merkmalen:
   Viskosität bei 25° C; 0,8 Pa · s,
   Epoxid-Äquivalentgewicht: 180,
   Epoxidwert: 0,56,
   mittleres Molekulargewicht: 330.

2) 7 Gew.-%, bezogen auf das Epoxidharz, eines Gemisches bestehend aus 35 Gew.-% p-Nonylphenol oder Dodecylphenol;
   30 Gew.-% Bisphenol A der Formel $HOC_6H_4—C(CH_3)_2—C_6H_4OH$ und
   35 Gew.-% Methyläthylketon oder Methylisobutylketon.

3) Schäumer: 35 Gew.-%, bezogen auf die zuzusetzende Härtemenge, lineares Polymethylhydrogensiloxan mit etwa folgenden Merkmalen:
   Viskosität bei 25° C: 30 mm$^2$ · S$^{-1}$,
   Dichte bei 25° C: 1000,
   Brechungsindex: n    = 1,396.

4) Accelerator: 25 Gew.-%, bezogen auf die zuzusetzende Härtermenge Salicylsäure oder Phosphorsäure.

Die erforderliche Härtermenge ist, wie bekannt, von dem Epoxidwert des Harzes und dem jeweils verwendeten Amin abhängig. Es wird gewöhnlich mit einem geringen Aminüberschuß gearbeitet.

Gemäß der vorstehend schon erwähnten besonders vorteilhaften Ausführungsweise erfolgt die Aushärtung in Gegenwart von reaktionsäquivalenten Mengen von Polybutadien und/oder Mischpolymerisaten auf Basis von Butadien und Styrol.

Diese Ausführungsweise beruht auf den in der AT-A 262 619 beschriebenen Härtungsverfahren, das die Herstellung von Kunststoffen mit einem Härtungsgrad von glashart bis nachgiebig elastisch ermöglicht. Dies wird durch entsprechende Wahl der Anteile des zur Aushärtung gelangenden Epoxidharzes und des Polybutadiens bzw. des copolymerisierten Butadien-Styrols erreicht, wobei mit steigendem Anteil des dem Epoxidharz zugesetzten Polymeren bzw. Copolymeren die Härte des Endproduktes abnimmt, bis es elastisch und dehnbar wird. Auf diese Weise können erfindungsgemäß den jeweiligen Anforderungen entsprechend, gummielastische bis stahlharte Schaumstoffe erhalten werden.

Nach dem erfindungsgemäßen Verfahren können Ausgangsstoffe in nachstehenden Anteilen eingesetzt werden.

| | Butadien-Styrole bzw. Polybutadien | Epoxidharzgehalt der erfindungs- gemäßen Mischung | Polyamine als Härter |
|---|---|---|---|
| 1.) | 50 | 730 | 220 |
| 2.) | 100 | 700 | 200 |
| 3.) | 150 | 650 | 200 |
| 4.) | 200 | 600 | 200 |
| 5.) | 250 | 550 | 200 |

Als Polybutadien bzw. Mischpolymerisate auf Basis von Butadien und Styrol werden vorzugsweise epoxidierte Polymere dieser Art mit einem Sauerstoffgehalt von 4—12 Masse-% und einer Viskosität von maximal 300 Pa · s bis 20° C eingesetzt.

Diese Anteile sind jeweils auf 1000 Gewichtseinheiten bezogen.

Die Zusammensetzung 1.) ergibt ein sehr hartes Endprodukt. In der Reihenfolge der Zusammensetzung 2.), 3.), 4.), 5.) nimmt die Härte ab, und das Endprodukt wird dementsprechend elastischer sowie nachgiebiger und dehnbarer.

Die Einstellbarkeit des Härtegrades des zu bildenden Schaumstoffes macht diesen für vorliegende Erfindung besonders geeignet. So kann die Härte bzw. Elastizität des Schaumstoffes den jeweiligen Bedingungen entsprechend, z. B. unter Berücksichtigung von hohen Wellengängen, eingestellt werden.

Die erfindungsgemäße Vorgangsweise sei an Hand des folgenden Beispiels veranschaulicht.

In eine Schale der Abmessung 27 × 34 cm gibt man 5 cm hoch Wasser und darauf 20 cm³ Rohöl. Das Rohöl breitet sich zu einer annähernd kreisförmigen Fläche von etwa 11,5 cm² aus.

In einem Becherglas wird von der bereits erwähnten Mischung M eine Menge von etwa 30 g angesetzt. Innerhalb der Topfzeit dieser Mischung gießt man um die Öllache einen schmalen Ring von etwa 28 g der Mischung. Nach einigen Minuten ist der Ring ausgeschäumt und hat das Öl vollkommen adsorbiert.

Wenn bei Einsatz von mehr Rohöl und Bildung einer größeren Öllache nach Bildung des gleichen schmalen Ringes Schaummaterial wie in obigem Beispiel in der Mitte eine ungebundene Ölschicht verbleibt, kann diese durch Aufbringung einer weiteren Menge Schaummaterial beseitigt werden.

## Patentansprüche

1. Verfahren zur Beseitigung von einer auf Wasser schwimmenden Flüssigkeit, z. B. Öl, insbesondere von Rohöl auf Meerwasser, durch in-situ-Bildung eines wasserbeständigen Kunststoffschaumes im Bereich der zu reinigenden Wasseroberfläche, dadurch gekennzeichnet, daß um die zu beseitigende Flüssigkeit herum und allenfalls auch in etwa der Mitte derselben eine Mischung, die ein lösungsmittelfreies flüssiges Epoxidharz, ein Siliconpolymer mit Si—H-Gruppen als Schäumungsmittel, 5—15 Gew.-%, bezogen auf das Epoxidharz, eines Harzvergüters auf Basis eines Alkylphenols und eines Bisphenols sowie eines Methylalkylketons und 20—30 Gew.-%, bezogen auf die zuzusetzende Härtermenge, eines Accelerators enthält, mit einem Di- oder Polyamin zur Aushärtung gebracht wird.

2. Verfahren nach Anspruch 1, dadurch gekennzeichnet, daß etwa 7 Gew.-%, bezogen auf das Epoxidharz, des Harzvergüters eingesetzt werden.

3. Verfahren nach Anspruch 1 oder 2, dadurch gekennzeichnet, daß etwa 25 Gew.-%, bezogen auf die zuzusetzende Härtemenge, des Accelerators eingesetzt werden.

4. Verfahren nach einem der Ansprüche 1 bis 3, dadurch gekennzeichnet, daß der Mischung 10—100 Gew.-%, bezogen auf das Epoxidharz, eines Zuschlagstoffes zugesetzt wird.

5. Verfahren nach Anspruch 4, dadurch gekennzeichnet, daß der Mischung 10—20 Gew.-%, bezogen auf das Epoxidharz, des Zuschlagstoffes zugesetzt wird.

6. Verfahren nach Anspruch 4 oder 5, dadurch gekennzeichnet, daß als Zuschlagstoff Asbestmehl, Asbestkurzfasern, Holzmehl oder Vermiculit verwendet wird.

7. Verfahren nach einem der Ansprüche 1 bis 6, dadurch gekennzeichnet, daß die Mischung mit Äthylendiamin, Diäthylentriamin, Dipropylentriamin oder Triäthylentetramin zur Aushärtung gebracht wird.

8. Verfahren nach einem der Ansprüche 1 bis 7, dadurch gekennzeichnet, daß die Mischung in Gegenwart von reaktionsäquivalenten Mengen von Polybutadien und/oder Mischpolymerisaten auf Basis von Butadien und Styrol mit dem Di- oder Polyamin zur Aushärtung gebracht wird.

## Claims

1. A process for removing liquid floating on water, for example oil, in particular crude oil on seawater, by in situ formation of a water-resistant plastics foam in the region of the surface of water to be cleaned, characterised in that a mixture which contains a solvent-free fluid epoxy resin, a silicone polymer having Si—H-groups as a foaming agent, from 5 to 15% by weight, with respect to the epoxy resin, of a resin improver based on an alkyl phenol and a bisphenol as well as a methylalkylketone, and from 20 to 30% by weight, with respect to the amount of hardener to be added, of an accelerator, is caused to harden around the liquid to be removed and possibly also in approximately the middle thereof, by means of a di-or polyamine hardener.

2. A process according to Claim 1, characterised in that about 7% by weight based on the epoxy resin of the resin improver is used.

3. A process according to Claim 1 or Claim 2, characterised in that about 25% by weight based on the amount of hardener to be added of accelerator is used.

4. A process according to one of Claims 1 to 3, characterised in that 10 to 100% by weight based on the epoxy resin of an additive substance is added to the mixture.

5. A process according to Claim 4, characterised in that from 10 to 20% by weight based on the epoxu resin of the additive substance is added to the mixture.

6. A process according to Claim 4 or Claim 5, characterised in that the additive substance used is asbestos flour, short asbestos fibres, wood flour or vermiculite.

7. A process according to one of Claims 1 to 6, characterised in that the mixture is caused to harden with ethylene diamine, dieethylene triamine, dipropylene triamine or triethylene tetramine.

8. A process according to one of Claims 1 to 7, characterised in that the mixture is caused to harden with the di- or polyamine in the presence of reaction-equivalent amounts of polybutadiene and/or copolymers based on butadiene and styrene.

## Revendications

1. Procédé pour éliminer un liquide flottant sur l'eau, par exemple de l'huile de pétrole, en particulier du pétrole brut sur de l'eau de mer, par formation sur place, dans la zone de la surface d'eau à nettoyer, d'une mousse de matière plastique pouvant résister à l'eau, procédé caractérisé en ce qu'on fait durcir, à l'aide d'une di- ou polyamine, autour du liquide à éliminer et éventuellement aussi au milieu approximativement de ce liquide, un mélange qui contient une résine époxyde liquide sans solvant, un polymère de type silicone comportant des groupes Si—H comme agent de moussage, 5 à 15% en poids, par rapport à la résine époxyde, d'un agent, à base d'un alkylphénol et d'un bisphénol ainsi que d'une méthylalkylcétone, pour le traitement de la résine, et 20 à 30% en poids, par rapport à la quantité de durcisseur ajoutée, d'un accélérateur.

2. Procédé selon la revendication 1, caractérisé en ce qu'on utilise environ 7% en poids, par rapport à la résine époxyde, de l'agent de traitement de la résine.

3. Procédé selon la revendication 1 ou 2, caractérisé en ce qu'on utilise environ 25% en poids, par rapport à la quantité de durcisseur à ajouter, de l'accélérateur.

4. Procédé selon l'une quelconque des revendications 1 à 3, caractérisé en ce qu'on ajoute au mélange 10 à 100% en poids, par rapport à la résine époxyde, d'un additif ou charge.

5. Procédé selon la revendication 4, caractérisé en ce qu'on ajoute au mélange 10 à 20% en poids, par rapport à la résine époxyde, de l'additif ou charge.

6. Procédé selon la revendication 4 ou 5, caractérisé en ce qu'on utilise comme additif ou charge de la farine d'amiante, de courtes fibres d'amiante, de la farine de bois ou de la vermiculite.

7. Procédé selon l'une quelconque des revendications 1 à 6, caractérisé en ce qu'on fait durcir le mélange à l'aide de l'éthylènediamine, de la diéthylènetriamine, de la dipropylènetriamine ou de la triéthylènetétramine.

8. Procédé selon l'une quelconque des revendications 1 à 7, caractérisé en ce qu'on fait durcir le mélange, à l'aide de la di- ou polyamine, en opérant en présence de quantités réactives équivalentes de polybutadiène et/ou de copolymères à base de butadiène et de styrène.